Europäisches Patentamt

European Patent Office

Office européen des brevets

(11) Publication number: **0 239 285**
**A2**

# EUROPEAN PATENT APPLICATION

(21) Application number: **87302081.2**

(51) Int. Cl.⁴: **G01F 11/28**

(22) Date of filing: **11.03.87**

(30) Priority: **12.03.86 GB 8606051**

(43) Date of publication of application:
**30.09.87 Bulletin 87/40**

(84) Designated Contracting States:
**AT BE CH DE ES FR GB GR IT LI LU NL SE**

(71) Applicant: **Cope Allman Plastics Limited
Walton Road Farlington
Portsmouth Hampshire, PO6 1TS(GB)**

(72) Inventor: **Wortley, Michael John
94 Charlesworth Drive
Waterlooville Hampshire(GB)**

(74) Representative: **Duncan, Angus Henry et al
Barker, Brettell & Duncan 138 Hagley Road
Edgbaston Birmingham, B16 9PW(GB)**

(54) **Metering dispensers.**

(57) In a dispensing container for liquids comprising a squeeze bottle (1) with a measuring cup (2) in its neck and a dip tube (3) protruding through the base of the cup the amount that is measured out by the cup can be altered by selecting the appropriate one of a number of different spacers (4) which fit onto the top end of the dip tube and jam at a level in the tapering or stepped cup determined by the transverse dimension of the spacer.

FIG.1.

## METERING DISPENSERS

This invention relates to a simple form of dispenser for enabling a user to measure out a predetermined quantity of liquid product. There is a need for such a dispenser in various horticultural and domestic situations, for example in adding liquid detergent to a washing machine of dishwasher, in diluting measured quantities of concentrated weedkiller or fertiliser or in dispensing liquid disinfectants or foodstuffs or medicines by the spoonful. Pouring from a bottle into a spoon or a small measuring cup is troublesome, inaccurate and often leads to spillage. Commercial measuring devices such as liquid soap dispensers or the spirit dispensers used in bars are expensive and complex.

It has therefore been proposed before, for example in British Patent Specification No. 2 067517, to provide a squeeze bottle with a measuring cup in its upper region. A further improvement in this field forms the subject of our own published British Patent Application No. 2 146973A. In that application we proposed that the volume of liquid to be dispensed should be determined by selecting the height of the pillar or spigot in the centre of the cup through which a dip tube projects, and by using the same basic moulding tools for the cup, but with interchangeable core pins to form the pillar one could mould a range of cups of the same outside dimensions but different measured dosages.

However, this means that once a given cup is manufactured it is only capable of dispensing one particular volume of liquid.

The aim of the present invention is to allow standard cups to be manufactured in a way that allows the volume which they are to measure to be selected at will subsequently. According to the invention this is achieved in that the cup is made of an internal shape that is not uniform in a vertical direction, the dip tube is movable within the cup, and the position of the top end of the dip tube (or, at least, of that part of it which determines the level of the liquid in the cup) is determined by a spacer which spans the interior of the cup and of which the vertical position is, by virtue of the non-uniform cross-section of the cup, determined by its size.

In the simplest case the inside of the cup is of round cross-section and tapers in diameter from top to bottom; if a spacer in the form of a large perforated disc or spider is used, the spacer will jam in the top of the cup and the dip tube will therefore be able to extend up to the top, so that the whole of the volume of the cup is used. If this spacer is replaced by a smaller one it will jam further down the cup, pushing down the dip tube with it, and so the cup will measure out a correspondingly smaller volume.

In a preferred arrangement, in preference to a continuous taper, we use a cup having a stepped internal profile, so that there is a series of shoulders, each smaller in diameter than the one above. There is a spacer matched to each shoulder, and in fact each size of spacer can have permanent marking on it (e.g. moulded figures) to indicate the volume of dose which the use of that spacer will give.

In this way we can manufacture a single size of cup which can be used to provide a range of doses according to the spacer used with it. The spacer may be fitted before sale or the dispenser could be marketed with a set of spacers that allow the user to select the dose he requires, and to change it if he wishes.

The invention will now be briefly described by way of example with reference to the accompanying drawings, in which:-

Figure 1 is a vertical section through a squeeze bottle to which the invention is applied;

Figure 2, 3, 4 and 5 are respectively a plan view, a side elevation from each of two directions and an inverted plan view of a spacer for the bottle of Figure 1; and

Figure 6 is a plan view of an alternative shape of spacer.

A squeeze bottle 1 blow-moulded from a suitable plastics material has walls sufficiently thin to allow it to be deformed inwards easily by a user's hand. In its neck it carries an upwardly open measuring cup 2 in the form of a rigid plastics moulding, with a flanged opening in its lower end to receive a dip tube 3. The neck of the container has an external screw thread to receive a cap, not shown.

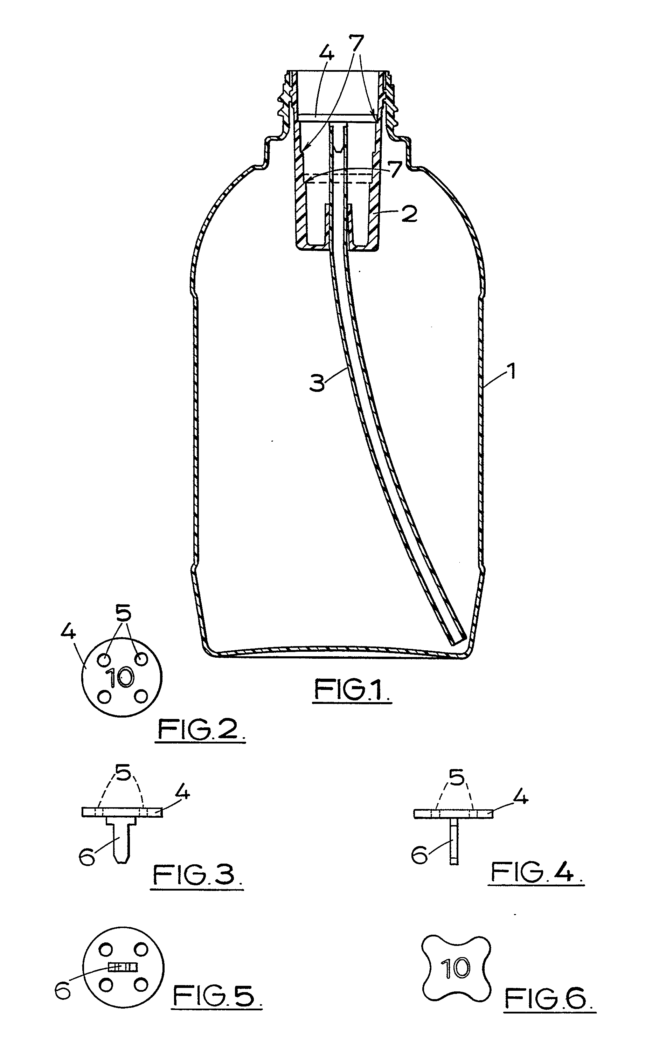

The dip tube 3 is a frictional fit in the lower end of the cup 2. The open upper end of the dip tube receives a spacer 4, shown in Figures 2 to 5, which has a number of holes 5 in it (four, in the example shown) and a flat spigot 6 on it underside by which it engages tightly in the top end of the dip tube, but without blocking the flow of liquid in the tube.

The number and size of the holes in the spacer 4 is not important provided it allows free passage of the liquid; indeed it could instead be of spider-like form, or have peripheral notches instead of holes, as illustrated by the cloverleaf shape of the version shown in Figure 6.

The metering dispenser described operates in a known manner, like those of the earlier patent applications referred to above; when there is liquid in the bottle and the user wishes to dispense a measured quantity he squeezes the bottle to force the liquid up the dip tube and into the cup 2. Provided he forces enough liquid up to fill the cup up to the level of the top end of the dip tube, or above it, then when he relaxes his grip any surplus liquid, above the level of the top of the tube, flows back down the tube and the volume of the liquid measured out is that of the cup up to the level of the top of the tube. He then pours this measured quantity out by tilting the bottle. As long as the pouring is done reasonable quickly there is no significant flow from the bottle itself during the time it is tilted.

As stated, this general principle has been proposed. However, the measured quantity that could be dispensed was fixed by the geometry of the cup and the length of the dip tube. In the arrangement according to the invention, however, the inside of the cup 2 is tapered convergently downwards, in a series of steps 7 in the example shown, and the outer dimensions of the spacer 4 are such as to cause it to rest on one of the steps. In example shown there are three steps, and the cup can be associated with three different sizes of spacer. In Figure 1 the largest spacer is in place but, as indicated in broken lines, if it is replaced by a smaller spacer that smaller one would fit further down the cup, pushing the dip tube down with it, and then the cup would be suitable for measuring out a correspondingly smaller quantity of liquid.

Preferably, as shown in Figures 2 and 6, the measured volume of liquid in cubic centimetres associated with a given spacer is marked on the spacer, for example it may be in the form of embossed figures. In a typical case there may be spacers for measuring 10. 7.5 and 5cc.

It will be understood that, although the cup is of circular cross-section in the example shown, it could be of different shape. Moreover, although three definite shoulders are shown, formed by the steps 7, it would be possible within the scope of the invention for the inside wall to be tapered continuously rather than in steps, or to be provided with or inwardly projecting lugs or steps which are not circumferentially continuous.

Claims

1. A system for metering measured quantities of liquid from a flexible-walled container (1) comprising an upwardly open cup (2) having an opening in its base through which a dip tube (3) frictionally fits, the inside wall of the cup having an non-uniform cross-section, and a spacer (4) which engages and locates the top end of the dip tube and also engages the inside wall of the cup at a level determined by the transverse dimension of the spacer.

2. A system according to claim 1 in which the inside wall of the cup is of circular cross-section and tapers convergently downwards.

3. A system according to claim 1 in which the inside wall of the cup converges in a series of at least two steps (7) defining shoulders.

4. A system according to any one of claims 1 to 3 in which the spacer engages the dip tube by means of an integral spigot (6) on the underside of the spacer engaging tightly within the end of the dip tube.

5. A set of components comprising a system according to any on claims 1 to 4 including at least two of the said spacers of different transverse dimension.

6. A set of components according to claim 5 in which each spacer has markings on it indicating the measured volume with which it is associated.

FIG.1.

FIG.2.

FIG.3.

FIG.4.

FIG.5.

FIG.6.